# FASCICULE DE BREVET EUROPEEN

(11) **EP 2 396 255 B1**
(45) Date de publication et mention de la délivrance du brevet: **16.10.2013**
(21) Numéro de dépôt: 10707076.5
(22) Date de dépôt: 09.02.2010
(51) Int. Cl.: B65G 15/32, B29D 29/06

(54) **COURROIE À CRÊTE TRANSPORTEUSE EN MATIÈRE THERMOPLASTIQUE**
GEZAHNTES FÖRDERBAND AUS THERMOPLASTISCHEM MATERIAL
RIDGED CONVEYOR BELT MADE OF A THERMOPLASTIC MATERIAL

(30) Priorité: 10.02.2009 FR 0900571
(43) Date de publication de la demande: 21.12.2011
(73) Titulaire: Mafdel, 38790 Saint-Georges-d''Espéranche (FR)
(72) Inventeur: JOUFFRAY, François-Régis, F-38300 Culin (FR)
(74) Mandataire: Hecké, Gérard
(86) Numéro de dépôt international: PCT/FR2010/000093
(87) Numéro de publication internationale: WO 2010/092248

(56) Documents cités:
- EP-A1- 1 308 404
- FR-A- 1 495 472
- JP-U- 52 020 297
- JP-U- 52 165 099

## Description

### Domaine technique de l'invention

L'invention est du domaine des courroies transporteuses pour convoyeur. Elle a pour objet une courroie à crête en matière thermoplastique prévue pour être refermée en boucle sur elle-même, en vue d'être entraînée par des moyens de transmission pour le convoyage et le transport en continu d'articles ou de pièces. L'utilisation d'une courroie à crête permet de minimiser le contact entre la courroie et le produit à transporter. L'emploi de ce type de courroie s'est généralisé pour le transport des carreaux ou des tuiles, en vue d'un émaillage ou de l'apposition d'une couche de peinture ou de vernis.

### État de la technique

Depuis l'apparition de courroies à crêtes thermoplastiques, ce type de courroie se présente sous la forme d'un profil trapézoïdal (compatible avec les poulies trapézoïdales du marché) surmonté d'une forme triangulaire, le tout étant monobloc. La courroie peut comporter un renforcement central par une ou plusieurs fibres pour limiter son allongement lors du transport de charges lourdes. Ces fibres de renforcement sont généralement disposées à hauteur de la fibre neutre de la courroie et peuvent-être composées de fibres polyester, aramide...

La présence d'une crête massive entraîne néanmoins un problème de surpoids et une souplesse insuffisante de la courroie. En effet, les courroies à crêtes présentent un rapport entre hauteur et largeur pénalisant lors de l'enroulement sur les poulies. Le mouvement de pliage lors de l'enroulement de la courroie, entraîne des efforts importants de compression et d'extension de la matière plastique, respectivement à la partie basse et à la partie haute de la courroie, au détriment de sa déformation et de sa flexibilité. Le risque de retournement ou de rotation de la courroie sur elle-même est donc élevé lorsque la courroie est utilisée avec des poulies de faibles diamètres et/ou lorsque la courroie est soumise à des efforts latéraux.

Le document EP 1308404 décrit une courroie pour ce type d'application, comprenant un corps allongé de section trapézoïdale surmontée d'une crête massive de profil triangulaire destinée à supporter les articles pour le convoyage. Le corps et la crête sont réalisés dans des bandes de matières plastiques ayant des duretés et des compositions différentes, la matière de la crête étant plus souple que celle du corps. La crête est rapportée sur le corps par soudage, par exemple au moyen d'un chalumeau à air chaud, et d'un tambour presseur. La partie crête massive et souple est destinée à éviter la tendance au fléchissement de la courroie lors du changement de direction. Le poids d'une telle courroie massive reste néanmoins assez important.

Le document FR 1495472 se rapporte à une courroie de transport, comprenant une crête évidée en forme de triangle isocèle, raccordée à une semelle par une partie étroite, en formant de chaque côté une gorge latérale. Le semelle de section rectangulaire ou carrée, est pleine, et est destinée à prendre appui sur un profilé support de guidage qui définit la trajectoire à suivre par la courroie. La hauteur de la courroie est inférieure à sa hauteur. Une telle courroie est particulièrement adaptée pour le transport de fruits ou d'objets fragiles.

Le document JP 52-165 099 divulgue une courroie à crête transporteuse selon le préambule de la revendication 1 et de la revendication 4.

Le problème posé par une courroie thermoplastique à crête lorsqu'elle est utilisée pour le transport d'objets lourds, par exemple en céramique, est celui de la possibilité de retournement lors de la flexion de la courroie au contact des poulies d'entraînement. Cet inconvénient est d'autant plus important pour des courroies plus hautes que larges.

### Objet de l'invention

L'objet de l'invention consiste à réaliser une courroie transporteuse à crête, ayant une hauteur supérieure à la largeur, et permettant de contrôler l'état de flexion, tout en réduisant le poids et le coût matière au mètre.

La courroie à crête transporteuse comporte un corps monobloc en matière thermoplastique, composé d'une première partie inférieure de section trapézoïdale, et d'une deuxième partie supérieure constituant une crête, la hauteur de la courroie étant supérieure à la largeur. Elle est caractérisée en ce que les deux parties du corps sont creuses en présentant respectivement un premier évidement et un deuxième évidement s'étendant dans la direction longitudinale de la courroie, et que des moyens sont prévus le long de la fibre neutre pour contrôler l'état de flexion de la courroie en empêchant le vrillage, lesdits moyens de contrôle de flexion étant formés soit par une paroi intermédiaire constituée par une bande de matière rejoignant les flancs internes du profil, et située à la fibre neutre de la courroie, soit par deux bossages opposés disposés en regard l'un de l'autre, et alignés avec la fibre neutre en étant espacés par un intervalle central.

Les deux évidements obtenus permettent de modifier la répartition de la matière dans le profil, et de réduire le poids au mètre. La mise en place à la fibre neutre d'une paroi intermédiaire horizontale crée un effort résistant en cas de vrillage par rapport à l'axe naturel de la courroie. Il en résulte un sens de flexion prioritaire qui empêche la courroie de fléchir ou de se retourner. Les contraintes d'extension de la matière en partie haute de la courroie et de compression de la matière en partie basse de la courroie sont diminuées, ce qui facilite le pliage de la courroie autour des poulies.

La bande de matière située à la fibre neutre pour contrôler le sens de flexion, peut-être réalisé dans une matière plus rigide que le reste de la courroie pour augmenter l'effort résistant en cas de retournement (vrillage).

La matière thermoplastique utilisée pour la fabrication de la courroie est de préférence à base de polyuréthane, ou d'élastomère polyester.

La courroie peut être réalisée par tout procédé de fabrication, notamment par soudure à chaud, par haute fréquence, ou par extrusion.

### Description sommaire des dessins

D'autres avantages et caractéristiques ressortiront plus clairement de la description qui va suivre de différents modes de réalisation de l'invention donnés à titre d'exemples non limitatifs et représentés aux dessins annexés, dans lesquels :
- la figure 1 représente une vue schématique en perspective d'une courroie selon l'invention ;
- la figure 2 est une vue en coupe transversale de la courroie selon la figure 1 ;
- les figures 2A, 3 et 4 sont des vues similaires de la figure 2 de trois variantes de réalisations.

### Description détaillée de l'invention

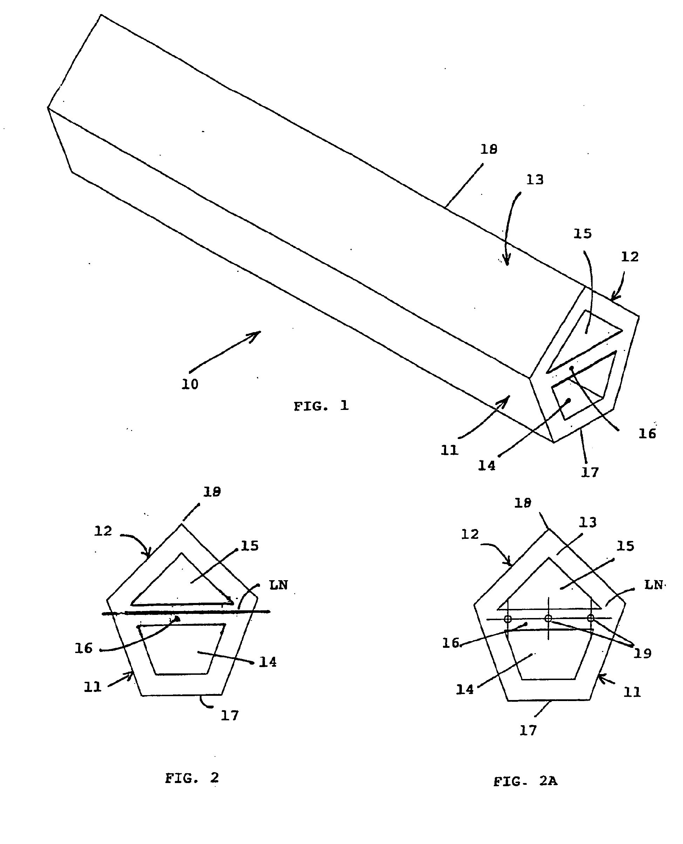

En référence aux figures 1 et 2, une courroie 10 comporte un corps monobloc en matière thermoplastique, subdivisé en une première partie 11 inférieure de section trapézoïdale, et une deuxième partie 12 supérieure en forme de crête 13. Les deux parties 11, 12 du corps sont creuses en présentant respectivement un premier évidement 14 et un deuxième évidement 15 séparés l'un de l'autre par une paroi intermédiaire 16.

La paroi intermédiaire 16 forme la grande base de la première partie 11 trapézoïdale, laquelle est située sensiblement dans la zone médiane de la courroie 10. La crête 13 triangulaire de la deuxième partie 12 creuse est rattachée aux extrémités de la paroi intermédiaire 16.

La matière thermoplastique de la courroie 10 peut être à base de polyuréthane ou d'élastomère de polyester. La fabrication de la courroie 10 est obtenue directement par extrusion avec la même matière thermoplastique.

Le deuxième évidement 15 prismatique est continu à l'intérieur de la crête 13, et permet d'assouplir efficacement la deuxième partie 12 supérieure pour faciliter le pliage et la flexion de la courroie. La flexibilité optimum qui en résulte permet de réduire les efforts de compression et d'extension.

La hauteur de la courroie 10 depuis la petite base 17 de la première partie 11 jusqu'au sommet 18 de la crête 13, est plus importante que la largeur le long de la paroi intermédiaire 16. Le rapport de la hauteur sur la largeur est supérieur à 1, par exemple 1,1.

La paroi intermédiaire 16 est formée par une bande de matière venant de moulage avec le corps. Elle est agencée le long de la fibre neutre LN entre les deux parties 11, 12, et sert à maintenir la courroie 10 dans l'état de flexion souhaité. Selon la figure 2, la paroi intermédiaire 16 est rectiligne, et continue en séparant les deux évidements 14, 15 l'un de l'autre. La fibre neutre LN correspond à la trace du plan transversal où la matière thermoplastique ne subit aucune contrainte de compression ou d'extension lors de l'enroulement autour des poulies.

La mise en place à la fibre neutre LN de matière formant la paroi intermédiaire 16 au-dessus du premier évidement 14, crée un effort résistant en cas de vrillage par rapport à l'axe naturel de la courroie. Il en résulte un sens de flexion prioritaire qui empêche la courroie de vriller ou de se retourner.

Il est possible d'adapter l'effort résistant en modifiant l'épaisseur ou la dureté de la paroi intermédiaire 16.

D'autres moyens de contrôle de la flexion peuvent être prévus le long de la fibre neutre LN pour éviter le vrillage de la courroie :

Selon la variante de la figure 2A, des armatures 19 de renforcement peuvent être logées à l'intérieur de la paroi 16 en s'étendant dans la direction longitudinale de la courroie. Les armatures 19 sont constituées de manière connue par des fibres d'aramide ou de polyester destinées à augmenter l'effort résistant de la courroie, et à définir un certain état de flexion. Ces armatures 19 sont agencées dans un même plan passant par la fibre neutre LN.

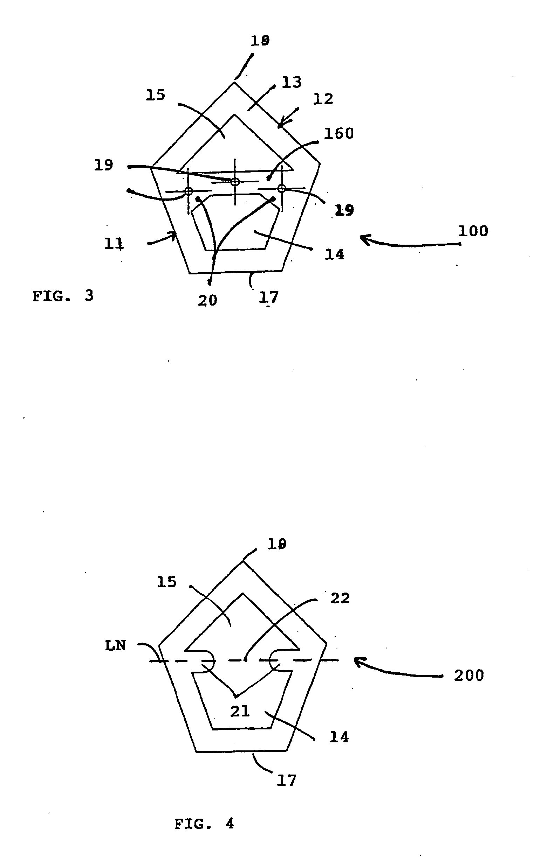

Sur la figure 3 concernant la courroie 100, les extrémités de la paroi intermédiaire 160 comportent des renforts 20 de raccordement aux flancs internes du premier évidement 14, de matière pour augmenter l'effort résistant lors d'une flexion latérale.

Sur la figure 4 relative à la courroie 200, la paroi intermédiaire est discontinue, et se limite à deux bossages 21 opposés disposés en regard l'un de l'autre, et alignés avec la fibre neutre LN en étant espacés par un intervalle 22 central.

Selon une autre variante, il est également possible d'opérer une coextrusion de deux matières plastiques différentes pour la fabrication du corps de la courroie.

Tout autre profil de crête 13 évidée peut être utilisé en fonction de la flexibilité souhaitée.

L'usage des courroies creuses selon les figures 1 à 4, permet de réduire le poids au mètre, et confère à la courroie un sens de pliage prioritaire. La bande de matière s'étendant le long de la fibre neutre LN contribue à maintenir la courroie dans l'état de flexion souhaité.

## Revendications

1. Courroie à crête transporteuse comportant un corps monobloc en matière thermoplastique, composé d'une première partie (11) inférieure de section trapézoïdale, et d'une deuxième partie (12) supérieure constituant une crête, la hauteur de la courroie étant supérieure à la largeur,
**caractérisée en ce que** les deux parties (11, 12) du corps sont creuses en présentant respectivement un premier évidement (14) et un deuxième évidement (15) s'étendant dans la direction longitudinale de la courroie, et que des moyens sont prévus le long de la fibre neutre (LN) pour contrôler l'état de flexion de la courroie en empêchant le vrillage, lesdits moyens de contrôle de flexion sont formés par une paroi intermédiaire (16) constituée par une bande de matière rejoignant les flancs internes du profil, et située à la fibre neutre (LN) de la courroie.

2. Courroie à crête selon la revendication 1, **caractérisée en ce que** la paroi intermédiaire (16) du corps renferme au moins une armature (19) de renforcement à base de fibres permettant de limiter l'allongement de la courroie.

3. Courroie à crête selon la revendication 1, **caractérisée en ce que** la paroi intermédiaire (16) est rectiligne, et continue en séparant les deux évidements (14, 15) l'un de l'autre.

4. Courroie à crête transporteuse comportant un corps monobloc en matière thermoplastique, composé d'une première partie (11) inférieure de section trapézoïdale, et d'une deuxième partie (12) supérieure constituant une crête, la hauteur de la courroie étant supérieure à la largeur,
**caractérisée en ce que** les deux parties (11 , 12) du corps sont creuses en présentant respectivement un premier évidement (14) et un deuxième évidement (15) s'étendant dans la direction longitudinale de la courroie, et que des moyens sont prévus le long de la fibre neutre (LN) pour contrôler l'état de flexion de la courroie en empêchant le vrillage, lesdits moyens de contrôle de flexion étant formés par une paroi intermédiaire (16) discontinue se limitant à deux bossages (21) opposés disposés en regard l'un de l'autre, et alignés avec la fibre neutre (LN) en étant espacés par un intervalle (22) central.

5. Courroie à crête selon la revendication 1 ou 4 , **caractérisée en ce que** la matière thermoplastique du corps est à base de polyuréthane.

6. Courroie à crête selon la revendication 1 ou 4, **caractérisée en ce que** la matière thermoplastique du corps est à base d'élastomère de polyester.

7. Courroie à crête selon la revendication 1 ou 4, **caractérisée en ce que** le deuxième évidement (15) dans la deuxième partie (12) présente une section transversale triangulaire.

## Patentansprüche

1. Gezahntes Förderband, das eine einstückige Einheit aus thermoplastischem Material umfasst, die aus einem ersten, unteren Teil (11) mit trapezförmigem Querschnitt und einem zweiten, oberen Teil (12) besteht, der einen Kamm bildet, wobei die Höhe des Bandes dessen Breite übersteigt,
**dadurch gekennzeichnet, dass** beide Teile (11, 12) des Körpers hohl sind und eine erste Aussparung (14) bzw. eine zweite Aussparung (15) umfassen, die sich in Längsrichtung des Bandes erstrecken, und dass entlang der neutralen Achse (LN) Mittel zur Überwachung des Biegezustands des Bandes zur Vermeidung der Verwindung vorgesehen sind, welche Mittel zur Biegeüberwachung von einer Zwischenwand (16) gebildet werden, die aus einem angeformten Band bestehen, das mit den Innenseiten des Profils verbunden ist und sich an der neutralen Achse (LN) des Bandes befindet.

2. Gezahntes Band nach Anspruch 1, **dadurch gekennzeichnet, dass** die Zwischenwand (16) der Körpers mindestens einen Verstärkungsbeschlag (19) auf Fasergrundlage einschließt, der das Beschränken der Streckung des Bands ermbglicht.

3. Gezahntes Band nach Anspruch 1, **dadurch gekennzeichnet, dass** die Zwischenwand (16) gerade und durchgehend ist und die beiden Aussparungen (14, 15) voneinander trennt.

4. Gezahntes Förderband, das eine einstückige Einheit aus thermoplastischem Material umfasst, die aus einem ersten, unteren Teil (11) mit trapezförmigem Querschnitt und einem zweiten, oberen Teil (12) besteht, der einen Kamm bildet, wobei die Höhe des Bandes dessen Breite übersteigt,
**dadurch gekennzeichnet, dass** beide Teile (11 12) des Körpers hohl sind und eine erste Aussparung (14) bzw. eine zweite Aussparung (15) umfassen, die sich in Längsrichtung des Bandes erstrecken, und dass entlang der neutralen Achse (LN) Mittel zur Überwachung des Biegezustands des Bandes zur Vermeidung der Verwindung vorgesehen sind, welche Mittel zur Biegeüberwachung von einer unterbrochenen Zwischenwand (16) gebildet werden, die sich auf zwei entgegengesetzte Höcker (21) beschränken, die einander gegenüberliegend angeordnet und auf die neutrale Achse (LN) gefluchtet und dabei durch einen mittigen Zwischenraum (22) voneinander beabstandet sind.

5. Gezahntes Band nach einem der Ansprüche 1 oder 4, **dadurch gekennzeichnet, dass** das thermoplastische Material des Körpers als Basis Polyurethan hat.

6. Gezahntes Band nach einem der Ansprüche 1 oder 4, **dadurch gekennzeichnet, dass** das thermoplastische Material des Körpers als Basis ein Polyester-Elastomer hat.

7. Gezahntes Band nach einem der Ansprüche 1 oder 4, **dadurch gekennzeichnet, dass** die zweite Aussparung (15) im zweiten Teil (12) einen dreieckigen Querschnitt aufweist.

## Claims

1. Ridged conveyor belt comprising a one-piece body made from a thermoplastic material, consisting of a first bottom part (11) with trapezoidal section, and a second top part (12) forming a ridge, the height of the belt exceeding its width,
**characterized in that** the two parts (11, 12) of the body are hollow and have a first recess (14) and a second recess (15) respectively which extend in longitudinal direction of the belt, and **in that** means are provided along the neutral axis (LN) to control the bending condition of the belt in preventing its torsion, which control means are formed by a partition wall (16) formed by a belt integrally cast which meets the inner faces of the profile and is provided at the neutral axis (LN) of the belt.

2. Belt according to claim 1, **characterized in that** the partition wall (16) of the body encloses at least one reinforcement fitting (19) on fibre basis allowing to limit the belt's elongation.

3. Belt according to claim 1, **characterized in that** the partition wall (16) is rectilinear and continuous, separating the two recesses (14, 15) from each other.

4. Ridged conveyor belt comprising a one-piece body made from a thermoplastic material, consisting of a first bottom part (11) with trapezoidal section, and a second top part (12) forming a ridge, the height of the belt exceeding its width,
**characterized in that** the two parts (11 12) of the body are hollow and have a first recess (14) and a second recess (15) respectively which extend in longitudinal direction of the belt, and **in that** means are provided along the neutral axis (LN) to control the bending condition of the belt in preventing its torsion, which control means are formed by an uncontinuous partition wall (16) limiting itself to two opposite bumps (21) facing one another and aligned with the neutral axis (LN) of the belt, and which are spaced from each other by a central gap (22).

5. Belt according to claim 1 or 4, **characterized in that** the thermoplastic material of the body is one on polyurethane basis.

6. Belt according to claim 1 or 4, **characterized in that** the thermoplastic material of the body is one on a polyester elastomere basis.

7. Belt according to claim 1 or 4, **characterized in that** the second recess (15) in the second part (12) has a triangular transversal section.
